# DEMANDE DE BREVET EUROPEEN

(11) **EP 4 306 943 A1**
(43) Date de publication de la demande: **17.01.2024**
(21) Numéro de dépôt: 23184651.0
(22) Date de dépôt: 11.07.2023
(51) Int. Cl.: G01N 21/88

(54) **PROCÉDÉ DE DÉTERMINATION D'UN ÉTAT D'AU MOINS UN ÉLÉMENT DE SOL, SYSTÈME ET ENSEMBLE ASSOCIÉS**

(30) Priorité: 13.07.2022 FR 2207233
(71) Demandeur: wiiDetect, 31000 Toulouse (FR); Orak, 91140 Villebon-sur-Yvette (FR)
(72) Inventeur: LOHEAC, Nicolas Eric Marie, 92500 RUEIL MALMAISON (FR); BECKERS, Francis, 77600 BUSSY SAINT GEORGES (FR); ROMERO, Xavier Maurice Germain, 95310 SAINT-OUEN-L'AUMÔNE (FR); TEURIO, Carole Sophie, 69390 MILLERY (FR); DEUDON, Martin, 31400 TOULOUSE (FR); ECH-CHEBLAOUY, Yassine, 31000 TOULOUSE (FR)
(74) Mandataire: Lavoix

(57) **Abrégé**

Procédé de détermination d'un état, notamment d'un état d'usure, d'au moins un élément de sol (3), le procédé de détermination comprenant :
- une étape de réception de signaux de mesure de l'élément de sol (3) en provenance d'au moins deux capteurs (8, 9, 10, 11, 12, 13) de types différents ;
- une étape de détermination d'une caractéristique de l'élément de sol (3) relative à son état par au moins un réseau de neurones (25, 27) en fonction des signaux de mesure.

## Description

La présente invention concerne un procédé de détermination d'un état d'au moins un élément de sol.

L'invention concerne en outre un système de détermination d'un état d'au moins un élément de sol.

L'invention concerne aussi un ensemble comprenant un tel système de détermination et un système de mesure.

La présente invention concerne le domaine de contrôle d'éléments de sol en vue d'une réutilisation de ces éléments.

Afin de réduire l'impact environnemental et des coûts, certains utilisateurs décident de nettoyer ou faire nettoyer des éléments de sol, comme par exemple des dalles de moquette, après une durée d'utilisation, en vue d'une utilisation nouvelle de ces dalles de moquette.

Toutefois, certaines dalles sont usées d'une telle manière qui ne permet pas un réemploi. Afin de décider si un réemploi d'une dalle de moquette donnée est possible, généralement un opérateur contrôle manuellement, notamment par contrôle visuel, l'état de chaque dalle.

Ce contrôle est en particulier basé sur l'expérience de l'opérateur, et est donc susceptible de varier. De nombreux facteurs peuvent altérer la décision de l'opérateur, même expérimenté, par exemple les circonstances du contrôle comme la luminosité.

Aussi, une perception subjective peut influer le contrôle, comme par exemple l'usure d'une dalle contrôlée précédemment.

Le contrôle manuel d'un grand nombre de dalles peut en outre prendre beaucoup de temps, car chaque dalle doit être inspectée individuellement.

Enfin, certaines types d'usure sont difficilement détectables, voire non-détectables par un contrôle visuel de l'opérateur.

Un but de l'invention est alors d'au moins réduire les inconvénients précités.

En particulier, un but de l'invention est d'obtenir un procédé de détermination d'un état d'au moins un élément de sol, qui est particulièrement fiable et/ou rapide.

A cet effet, un objet de l'invention est un procédé de détermination d'un état, notamment d'un état d'usure, d'au moins un élément de sol, le procédé de détermination comprenant :
- une étape de réception de signaux de mesure de l'élément de sol en provenance d'au moins deux capteurs de types différents ;
- une étape de détermination d'une caractéristique de l'élément de sol relative à son état par au moins un réseau de neurones en fonction des signaux de mesure.

Le procédé de détermination permet de déterminer un état d'au moins un élément de sol. Ce procédé est particulièrement fiable, puisque ledit réseau de neurones permet de déterminer la caractéristique de l'élément de sol relative à son état de manière automatisée, et particulièrement fiable.

Aussi, l'utilisation d'au moins deux capteurs de types différents permet d'augmenter la fiabilité, car des différentes propriétés de l'élément de sol sont ainsi prises en compte pour la caractéristique relative à l'état.

Par ailleurs, le procédé de détermination est particulièrement fiable, puisque les signaux de mesure permettent de relever des données concernant l'usure qui sont difficilement détectables, voire non-détectables, par un contrôle visuel par un opérateur par exemple.

Le procédé de détermination est particulièrement rapide, car la caractéristique relative à l'état est déterminée très rapidement par le réseau de neurones, comme suite à la réception des signaux de mesure.

Suivant d'autres aspects avantageux de l'invention, le procédé de détermination comprend une ou plusieurs des caractéristiques suivantes, prise(s) isolément ou suivant toutes les combinaisons techniquement possibles :
- le type de chaque capteur est choisi dans la liste constituée par un capteur d'image configuré pour prendre au moins une image dans un espace chromatique prédéterminé, tel que l'espace chromatique RGB ou l'espace chromatique TSL ; un capteur d'image de type capteur d'ultraviolet ; un capteur d'image de type capteur d'infrarouge ; un capteur d'image de type capteur de profondeur ; un capteur d'image de type capteur d'ultrason, et un capteur d'hydrométrie ;
- l'étape de détermination est mise en oeuvre par un premier réseau de neurones et par un second réseau de neurones recevant en entrée au moins une donnée de sortie du premier réseau de neurones ;
- l'étape de détermination comprend une sous-étape de détection, mise en oeuvre par le premier réseau de neurones, lors de laquelle le premier réseau de neurones fournit en sortie soit une indication selon laquelle l'élément de sol présente une usure inférieure ou égale à un seuil d'usure, soit une indication selon laquelle l'élément de sol présente une usure supérieure au seuil d'usure ;
- le premier réseau de neurones est un réseau de neurones préalablement entrainé par un élément de sol formant modèle pour définir le seuil d'usure ;
- l'étape de détermination comprend en outre une sous-étape de classification d'un défaut de l'élément de sol, mise en oeuvre par le second réseau de neurones, lors de laquelle le second réseau de neurones fournit en sortie ladite caractéristique de l'élément de sol, comprenant une classe de défaut dudit élément de sol dépendant des signaux de mesure ;
- lorsque l'indication en sortie du premier réseau de neurones indique que l'élément de sol présente une usure supérieure au seuil d'usure, le premier réseau de neurones fournit en outre en sortie au moins une position, sur une face de l'élément de sol, dudit défaut de l'élément de sol ;
- au moins un signal parmi les signaux de mesure comprend au moins une image de l'élément de sol, l'étape de détermination comprenant une sous-étape de prétraitement, lors de laquelle l'image de l'élément de sol est découpée en une pluralité de parties de tailles identiques ;
- lors de la sous-étape de détection, le premier réseau de neurones reçoit en entrée au moins chaque partie de l'image de l'élément de sol, et fournit en sortie au moins l'indication correspondante pour chaque partie de l'image de l'élément de sol ;
- au moins un signal des signaux de mesure comprend une mesure d'hydrométrie de l'élément de sol, et l'étape de détermination comprend en outre une sous-étape d'analyse d'hydrométrie, lors de laquelle un module d'analyse d'hydrométrie génère une alerte lorsque la mesure d'hydrométrie de l'élément de sol comprend une humidité strictement inférieure à un seuil inférieur prédéterminé ou strictement supérieure à un seuil supérieur prédéterminé ;
- le procédé comprend en outre une étape de mesure de l'élément de sol pour obtenir les signaux de mesure, l'étape de mesure comprenant au moins une première mesure et une seconde mesure successives, l'élément de sol étant éclairé par un dispositif d'éclairage mobile, la première mesure étant obtenue lorsque le dispositif d'éclairage mobile est positionné à une première position par rapport à l'élément de sol, et la seconde mesure étant obtenue lorsque le dispositif d'éclairage est positionné à une seconde position différente de la première position ;
- le procédé comprend en outre une étape d'émission au moins de la caractéristique de l'élément de sol relative à son état à au moins un système de détermination distant à un système de détermination mettant en oeuvre le procédé de détermination, pour un apprentissage d'un réseau de neurones distant du système de détermination distant.

L'invention a aussi pour objet un système de détermination d'un état, notamment d'un état d'usure, d'au moins un élément de sol, le système de détermination comprenant un module de réception configuré pour recevoir des signaux de mesure de l'élément de sol en provenance d'au moins deux capteurs de types différents. Le système de détermination est configuré pour déterminer une caractéristique de l'élément de sol relative à son état par au moins un réseau de neurones en fonction des signaux de mesure.

L'invention a également pour objet un ensemble comprenant un système de détermination tel que décrit ci-dessus, et comprenant en outre un système de mesure comprenant un dispositif de transport de l'au moins un élément de sol, et au moins deux capteurs de types différents.

Ces caractéristiques et avantages de l'invention apparaîtront à la lecture de la description qui va suivre, donnée uniquement à titre d'exemple non limitatif, et faite en référence aux dessins annexés, sur lesquels :
[Fig 1] la figure 1 est une vue schématique d'un ensemble comprenant un système de mesure et un système de détermination selon l'invention ;
[Fig 2] la figure 2 est une vue schématique d'un réseau de plusieurs ensembles de la figure 1, connectés entre eux, et
[Fig 3] la figure 3 est un ordinogramme d'un procédé de détermination d'un état d'au moins un élément de sol selon l'invention, mis en oeuvre par l'ensemble de la figure 1.

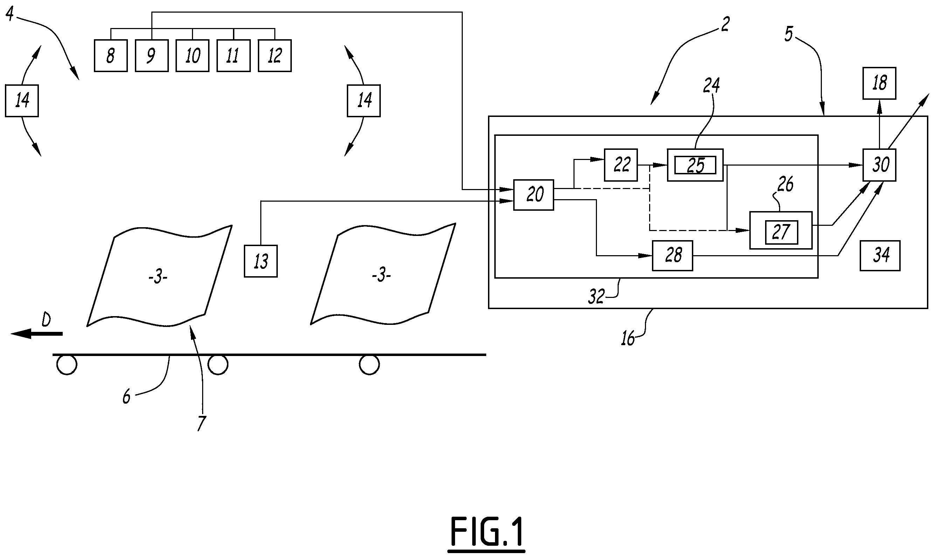

En référence à la figure 1, un ensemble 2 est configuré pour déterminer un état d'au moins un élément de sol 3, notamment un état d'usure de l'élément de sol 3.

Sur la figure 1, deux éléments de sol 3 sont représentés. Chaque élément de sol 3 est par exemple une dalle de moquette. En particulier, chaque élément de sol 3 comprend au moins une face comprenant des parties textiles.

Chaque élément de sol 3 présente de préférence des dimensions prédéterminées. Par exemple, chaque élément de sol 3 est quadratique. Selon un exemple, chaque élément de sol 3 présente une longueur et une largeur qui sont chacune sensiblement égales à 50 cm.

Selon un autre exemple, chaque élément de sol 3 est rectangulaire. Par exemple, chaque élément de sol 3 présente un longueur égale à 25 cm et une largeur égale à 100 cm.

L'ensemble 2 comprend un système de mesure 4 et un système de détermination 5 de l'état de l'élément de sol 3.

Le système de mesure 4 comprend par exemple un dispositif de transport 6 configuré pour transporter l'élément de sol 3 à une position de mesure 7, des capteurs 8, 9, 10, 11, 12, 13 configurés pour obtenir des mesures de l'élément de sol 3 positionné à la position de mesure 7, et au moins un dispositif d'éclairage mobile 14.

Le système de mesure 4 comprend au moins deux capteurs 8, 9, 10, 11, 12, 13 de types différents. De préférence, le système de mesure 4 comprend plus que deux capteurs de types différents. De préférence encore, le système de mesure 4 comprend chacun des types de capteurs 8, 9, 10, 11, 12, 13. Des exemples de ces capteurs sont décrits ci-dessous.

Par « type » ou « type de capteur », il est entendu une technologie de mesure du capteur pour la mesure ou détection d'une propriété de l'élément de sol 3.

Le système de mesure 4 comprend par exemple en outre un coffret, non représenté, formant un espace comprenant la position de mesure 7, et dans lequel les capteurs 8 à 13 sont agencés. L'espace formé par le coffret est notamment étanche à la lumière de l'extérieur du coffret. Par exemple, des surfaces intérieures sont peintes en une couleur noire apte à absorber au moins certains rayons de lumière.

Le dispositif de transport 6 comprend par exemple un tapis roulant configuré pour déplacer chaque élément de sol 3 selon une direction de transport D. Par exemple, le tapis roulant est configuré pour déplacer les éléments de sol 3, l'un après l'autre, selon la direction de transport D à la position de mesure 7 pour la mesure par les capteurs 8, 9, 10, 11, 12, 13. Par exemple, le tapis roulant est configuré pour s'arrêter pendant une durée prédéterminée lorsque l'un des éléments de sol 3 est positionné à la position de mesure 7, et puis transporter l'élément de sol 3 suivant à la position de mesure 7.

Chacun des capteurs 8, 9, 10, 11, 12, 13 est de préférence de type différent l'un par rapport à l'autre.

Par exemple, le type de chaque capteur 8 à 13 est choisi parmi les types de capteurs suivants : un capteur d'image 8 configuré pour prendre au moins une image dans un espace chromatique prédéterminé ; un capteur d'image de type capteur d'ultraviolet 9 ; un capteur d'image de type capteur d'infrarouge 10 ; un capteur d'image de type capteur de profondeur 11 ; un capteur d'image de type capteur d'ultrason 12, et un capteur d'hydrométrie 13.

Le capteur d'images 8 est par exemple configuré pour prendre au moins une image de couleur dans l'espace chromatique RGB (de l'anglais pour « Red Green Blue », également appelé RVB pour « Rouge Vert Bleu »). Selon un autre exemple, le capteur d'images 8 est configuré pour prendre au moins une image dans l'espace chromatique TSL (de « Teinte, Saturation, Luminosité », également appelé HSL en anglais pour « Hue, Saturation, Lightness »).

De préférence, le système de mesure 4 comprend deux capteurs d'images 8, l'un configuré pour prendre au moins une dans l'espace chromatique RBG, et l'autre configuré pour prendre l'image l'espace chromatique TSL.

Le capteur d'image de type capteur d'ultraviolet 9 est configuré pour prendre au moins une image à partir de rayons ultraviolets.

Le capteur d'image de type capteur d'infrarouge 10 est configuré pour prendre au moins une image à partir de rayons infrarouges.

Chaque capteur d'images 8, 9 et 10 permet en particulier d'obtenir des mesures concernant des défauts de couleur ou texture de l'élément de sol 3.

Le capteur d'image de type capteur de profondeur 11 est configuré pour prendre au moins une image comprenant la profondeur, ou distance, d'une face de l'élément de sol 3 par rapport au capteur de profondeur 11. En particulier, le capteur de profondeur 11 est configuré pour mesurer le temps de vol de signaux émis vers l'élément de sol 3 et reçus par réflexion de ces signaux par l'élément de sol 3.

Le capteur de profondeur 11 permet en particulier d'obtenir des mesures concernant une texture et/ou un relief de l'élément de sol 3.

Le capteur d'image de type capteur d'ultrason 12 est configuré pour prendre au moins une image de l'élément de sol 3 en utilisant des ultrasons. Le capteur d'ultrason 12 permet en particulier d'obtenir des mesures concernant des corps étrangers à l'intérieur de l'élément de sol 3, tels que la poussière.

Le capteur d'hydrométrie 13 est configuré pour mesurer l'humidité de l'élément de sol 3. Le capteur d'hydrométrie 13 comprend par exemple au moins deux piques aptes à contacter l'élément de sol 3 lors de la mesure de l'humidité.

Dans l'exemple de la figure 1, le système de mesure 3 comprend deux dispositifs d'éclairage mobile 14.

Chaque dispositif d'éclairage mobile 14 est mobile par rapport à l'élément de sol 3 et/ou par rapport à la position de mesure 7. En particulier, chaque dispositif d'éclairage mobile 14 est doté de moyens de positionnement, non représentés, configurés pour positionner le dispositif 14 par rapport à la position de mesure 7. Selon un exemple, les moyens de positionnement comprennent des rails présentant une forme d'hélice.

Le dispositif de détermination 5 est configuré pour déterminer l'état de l'élément de sol 3.

Selon l'invention, le dispositif de détermination 5 est ainsi configuré pour déterminer une caractéristique de l'élément de sol 3 relative à son état, notamment à son état d'usure.

Le dispositif de détermination 5 comprend par exemple un calculateur 16 et un dispositif d'affichage 18 configuré pour afficher des données ou informations reçues du calculateur 16.

Le calculateur 16 comprend par exemple un module de réception 20, un module de prétraitement 22, un module de détection 24 comprenant un premier réseau de neurones 25, un module de classification 26 comprenant un second réseau de neurones 27, un module d'analyse d'hydrométrie 28 et un module d'émission 30.

Chaque réseau de neurones 25 et 27 est un réseau de neurones artificielles comprenant de préférence plusieurs couches. Le premier réseau de neurones 25 comprend par exemple au moins 500 couches cachées.

Dans l'exemple de la figure 1, le module de réception 20, le module de prétraitement 22, le module de détection 24, le module de classification 26, le module d'analyse d'hydrométrie 28 et le module d'émission 30 sont chacun réalisés au moins partiellement sous forme d'un logiciel, ou d'une brique logicielle, par exemple stockés dans une mémoire 32 du calculateur 16 et exécutables par un processeur 34 du calculateur 16.

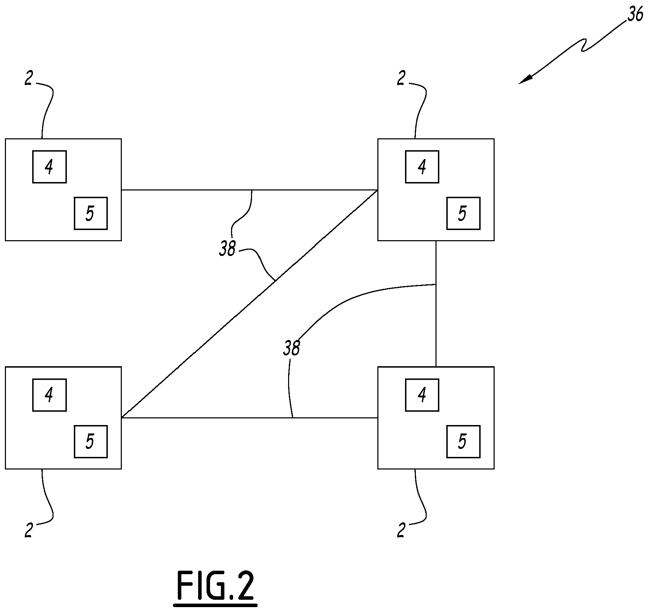

En référence à la figure 2, un réseau 36 comprend une pluralité d'ensembles 2, de préférence identiques entre eux, comprenant chacun le système de mesure 4 et le système de détermination 5 de l'état de l'élément de sol 3. Les ensembles 2 sont aptes à communiquer entre eux par des liaisons de données 38. En particulier, les ensembles 2 sont configurés pour échanger les caractéristiques relatives à l'état d'un élément de sol 3 respectif, déterminées par les systèmes de détermination 5 respectifs, notamment au vu d'un apprentissage du premier et/ou second réseau de neurones 25, 27 de chaque système de détermination 5.

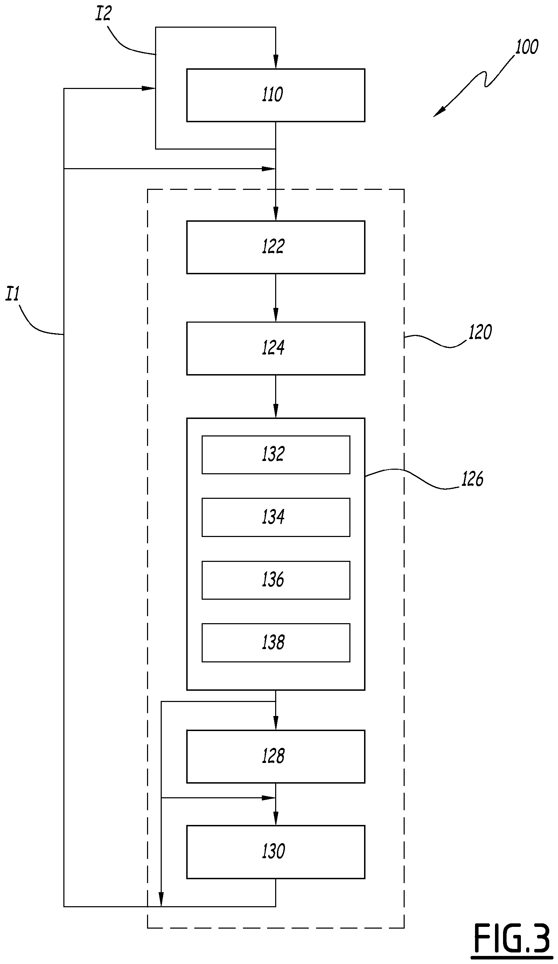

Le fonctionnement de l'ensemble 2, et en particulier du système de détermination 5 est maintenant décrit en référence à la figure 3 qui est un ordinogramme d'un procédé de détermination 100 de l'état, notamment de l'état d'usure, de l'élément de sol 3.

Le procédé de détermination 100 comprend notamment une phase d'apprentissage 110 et une phase d'exploitation 120.

Lors de la phase d'apprentissage 110, le premier réseau de neurones 25 est entraîné.

Par exemple, le premier réseau de neurones 25 reçoit en entrée des signaux de mesure, notamment des capteurs 8 à 13, d'un élément de sol 3 qui forme un modèle. Par « l'élément de sol 3 formant modèle », il est entendu un élément de sol dépourvu de défauts, en particulier un élément de sol non usé ou peu usé.

De préférence, un seuil d'usure est défini lors de la phase de d'apprentissage 110 par apprentissage du premier réseau de neurones 25.

Le seuil d'usure est une indication si une usure de l'élément de sol 3 est acceptable ou non par exemple par un utilisateur, notamment au vu d'un réemploi.

Le seuil d'usure est notamment obtenu par apprentissage du premier réseau de neurones 25 avec l'élément de sol 3 formant modèle.

Selon un exemple, lors de la phase d'apprentissage 110, le second réseau de neurones 27 est également entraîné. En particulier, le second réseau de neurones 27 reçoit en entrée une sortie du premier réseau de neurones 25. En complément optionnel, le second réseau de neurones 27 reçoit en entrée les signaux de mesure.

De préférence, l'apprentissage du premier et/ou second réseau de neurones 25, 27 est un apprentissage non supervisé.

La phase d'apprentissage 110 est de préférence mise en oeuvre au moins une fois avant la mise en oeuvre de la phase d'exploitation 120.

Selon un mode de réalisation, la phase d'apprentissage 110 et la phase d'exploitation 120 sont exécutées simultanément.

La phase d'exploitation 120 comprend par exemple une étape de mesure 122, une étape de réception 124, une étape de détermination 126, une étape d'émission 128 et une étape d'affichage 130.

Lors de l'étape de mesure 122, le système de mesure 4 mesure l'élément de sol 3 et génère les signaux de mesure. En particulier, chaque capteur 8 à 13 génère au moins un signal de mesure de la pluralité de signaux de mesure.

Par exemple, le capteur d'image 8 génère un signal de mesure comprenant au moins une image de l'élément de sol 3 dans l'espace chromatique prédéterminé.

Le capteur d'ultraviolet 9 génère un signal de mesure comprenant au moins une image de l'élément de sol 3 obtenue à partir de rayons ultraviolets, et le capteur d'infrarouge 10 un signal de mesure comprenant au moins une image de l'élément de sol 3 obtenue à partir de rayons infrarouges.

Le capteur de profondeur 11 génère en particulier un signal de mesure comprenant au moins une image comprenant la profondeur, ou distance, de la face de l'élément de sol 3 faisant face au capteur 11.

Le capteur d'ultrason 12 génère en particulier un signal de mesure comprenant une image de l'élément de sol 3 obtenue à partir des ultrasons.

Le capteur d'hydrométrie 13 génère en particulier un signal de mesure comprenant l'humidité d'au moins une partie de l'élément de sol 3.

De préférence, lors de l'étape de mesure 122, le dispositif d'éclairage mobile 14 éclaire l'élément de sol 3 qui est positionné à la position de mesure 7 lors de l'étape de mesure 122.

Selon un exemple, l'étape de mesure 122 comprend au moins une première mesure et une seconde mesure successives. Par exemple, la première mesure est obtenue lorsque le dispositif d'éclairage mobile 14 est positionné à une première position par rapport à l'élément de sol 3, et la seconde mesure est obtenue lorsque le dispositif d'éclairage 14 est positionné à une seconde position différente de la première position.

La première est seconde position sont notamment des positions tridimensionnelles, agencées en particulier à l'intérieur du coffret, non représenté, du système de mesure 4.

Les positions différentes lors de la première et seconde mesure permettent notamment de détecter des défauts différents de l'élément de sol 3.

Selon un exemple, l'étape de mesure 122 comprend des mesures à plus que deux positions différentes du dispositif d'éclairage mobile 14, par exemple à 4 ou 5 positions différentes. Lors de l'étape de réception 124, le module de réception 20 reçoit les signaux de mesure de l'élément de sol 3 en provenance des capteurs 8 à 13.

Lors de l'étape de détermination 126, le système de détermination 5 détermine la caractéristique de l'élément de sol 3 relative à son état, notamment son état d'usure. A cet effet, cet élément de sol 3 est en particulier positionné à la position de mesure 7.

L'étape de détermination 126 est de préférence mise en oeuvre par le premier réseau de neurones 25 et par le second réseau de neurones 27.

De préférence, dans l'exemple illustré sur la figure 1, le second réseau de neurones 27 reçoit en entrée au moins une donnée de sortie du premier réseau de neurones 25.

L'étape de détermination 126 comprend par exemple une sous-étape d'analyse d'hydrométrie 132, une sous-étape de prétraitement 134, une sous-étape de détection 136 et une sous-étape de classification 138.

Lors de la sous-étape d'analyse d'hydrométrie 132, le module d'analyse d'hydrométrie 28 analyse le signal de mesure reçu du capteur d'hydrométrie 13. Le module d'analyse d'hydrométrie 28 génère une alerte lorsque le signal de mesure comprenant l'humidité de l'élément de sol 3 comprend une humidité strictement inférieure à un seuil inférieur prédéterminé ou strictement supérieure à un seuil supérieur prédéterminé.

Selon un exemple, le module d'analyse d'hydrométrie 28 envoie au moins signal comprenant une valeur d'humidité de l'élément de sol 3 au module d'émission 30. Lorsque la valeur d'humidité n'est pas comprise entre le seuil inférieur prédéterminé et le seuil supérieur prédéterminé, ce signal comprend de préférence l'alerte.

Selon un exemple, lorsque le signal émis par le module d'analyse d'hydrométrie 28 comprend l'alerte, les sous-étapes 134, 136, 138 ne sont pas mises en oeuvre. En particulier, dans ce cas, l'élément de sol 3 mesuré est inadapté pour un réemploi, et une analyse d'autres propriétés de l'élément de sol 3 est ainsi inutile.

Lors de la sous-étape de prétraitement 134, le module de prétraitement 22 reçoit au moins un des signaux de mesure qui comprend au moins une image de l'élément de sol 3, par exemple obtenu par l'un des capteurs 8 à 12.

Le module de prétraitement 22 découpe l'image en une pluralité de parties de tailles identiques, et envoie chaque partie de l'image au module de détection 24 pour la mise en oeuvre de la sous-étape de détection 136.

Par exemple, lors de la sous-étape de prétraitement 134, le module de prétraitement 22 découpe l'image en un nombre prédéterminé, de préférence égal à un nombre en puissance de deux, tel que 4, 8, 16, 32, etc.

Selon un exemple, le module de prétraitement 22 transmet chaque partie de l'image séparément au module de détection 24 pour la mise en oeuvre de la sous-étape 136 pour chaque partie de l'image.

Selon un autre exemple, le module de prétraitement 22 génère une image à partir des parties découpées, en assemblant les parties selon un ordre prédéterminé ou selon un ordre aléatoire, et envoie cette image générée au module de détection 24 pour la mise en oeuvre de la sous-étape 136.

Par exemple, le module de prétraitement 22 découpe l'image pour obtenir plusieurs séries de parties d'images. Chaque série d'images comprend de préférence des images de taille identique. De préférence encore, chaque série comprend un nombre d'images différent par rapport aux autres séries d'images, notamment égal à une puissance de deux.

Par exemple, une première série de parties d'image comprend 4 images, une seconde série de parties d'images comprend 8 images, etc.

Le module de prétraitement assemble les parties de chaque série d'images pour obtenir une ou plusieurs image(s) générée(s) à partir de chaque série d'images, et envoie chaque image générée au module de détection 24 pour la mise en oeuvre de la sous-étape 136.

Lors de la sous-étape de détection 136, le module de détection 24 reçoit l'image ou les images du module de prétraitement 22.

En variante ou en complément, le module de détection 24 reçoit un ou plusieurs des signaux de mesure, notamment du module de réception 20. Cela est illustré sur la figure 1 par une ligne interrompue entre le module 20 et le module 24.

En particulier, le premier réseau de neurones 25 reçoit en entrée chaque partie de l'image de l'élément de sol 3 et/ou les signaux de mesure comprenant les images de l'élément de sol 3.

De préférence, le premier réseau de neurones 25 reçoit en entrée à la fois chaque image de l'élément de sol 3, séparément chaque partie d'image découpée par le module de prétraitement 22, et chaque image générée à partir des parties d'images.

Le premier réseau de neurones 25 fournit en sortie de préférence soit une indication selon laquelle l'élément de sol 3 présente une usure inférieure ou égale au seuil d'usure, soit une indication selon laquelle l'élément de sol 3 présente une usure supérieure au seuil d'usure.

De préférence, le seuil d'usure est défini lors de la phase d'apprentissage 110, en particulier au préalable de la mise en oeuvre de la phase d'exploitation 120.

Lorsque le premier réseau de neurones 25 reçoit en entrée les parties découpées de l'image de l'élément de sol 3 séparément, le réseau de neurones 25 fournit l'indication correspondante relative au seuil d'usure pour chaque partie de l'image de l'élément de sol 3.

Lorsque le premier réseau de neurones 25 reçoit en entrée à la fois chaque image de l'élément de sol 3, séparément chaque partie d'image, et chaque image générée à partir des parties d'images, le réseau de neurones 25 fournit en sortie de préférence l'indication pour chacune de ces entrées.

Selon un exemple préféré, lorsque l'indication en sortie du premier réseau de neurones 25 indique que l'élément de sol présente une usure supérieure au seuil d'usure, le premier réseau de neurones 25 fournit en outre en sortie au moins une position, sur une face de l'élément de sol, d'au moins un défaut de l'élément de sol 3. En complément facultatif, le premier réseau de neurones 25 fournit en outre une taille, une intensité et/ou un type de défaut en sortie.

Lors de la sous-étape de classification 138, le module de classification 26 classifie le ou les défaut(s) de l'élément de sol 3.

Le second réseau de neurones 27 reçoit en entrée au moins une sortie du premier réseau de neurones 25, en particulier l'indication si l'élément de sol 3 présente une usure inférieure, égale ou supérieure au seuil d'usure.

En complément facultatif, le second réseau de neurones 27 reçoit en entrée la position du défaut de l'élément de sol 3 sur la face de l'élément de sol 3, la taille, l'intensité et/ou le type de défaut, notamment de la part du premier réseau de neurones 25.

En complément facultatif, le second réseau de neurones 27 reçoit en entrée les signaux de mesure.

Le second réseau de neurones 27 fournit en sortie la caractéristique de l'élément de sol 3 relative à son état d'usure.

La caractéristique comprend de préférence une classe de défaut de l'élément de sol 3 dépendant des signaux de mesure.

La classe de défaut est de préférence définie par le second réseau de neurones 27 comme suite à un apprentissage. En particulier, le second réseau de neurones 27 met en oeuvre la sous-étape de classification 138 pour plusieurs éléments de sol 3 différents, et définit des classes en particulier à partir des données de sortie du premier réseau de neurones 25 et/ou des signaux de sortie.

Par exemple, la classe de défaut est une tache sur l'élément de sol 3, un trou et/ou une destruction au moins partielle, telle qu'une abrasion, d'une partie textile de l'élément de sol 3.

Lors de l'étape d'émission 128, le module d'émission 30 émet la caractéristique relative à l'état de l'élément de sol 3.

Selon un exemple, le module d'émission 30 émet la caractéristique au dispositif d'affichage 18. En complément facultatif, le module d'émission 30 émet en outre l'indication obtenue en sortie du premier réseau de neurones 25 et/ou un ou plusieurs des signaux de mesure.

Selon un autre exemple, ou en complément, le module d'émission 30 émet la caractéristique de l'élément de sol 3 à un système de détermination distant par rapport au système de détermination 5 mettant en oeuvre le procédé de détermination 100, pour un apprentissage d'un réseau de neurones distant du système de détermination distant. Par exemple, en référence à la figure 2, le module d'émission 30 émet la caractéristique à un autre ensemble 2 du réseau 36. En complément facultatif, le module d'émission 30 émet en outre l'indication obtenue en sortie du premier réseau de neurones 25 et/ou un ou plusieurs des signaux de mesure à ce système de détermination distant.

Lors de l'étape d'affichage 130, le dispositif d'affichage 18 affiche la caractéristique relative à l'état de l'élément de sol 3, l'indication obtenue en sortie du premier réseau de neurones 25 et/ou un ou plusieurs des signaux de mesure.

Le procédé de détermination 100, en particulier la phase d'exploitation 120, est de préférence répété(e) plusieurs fois pour des éléments de sol 3 différents, définissant des itérations successives. Cela est illustré par exemple sur la figure 3 par des flèches 11 pour la phase d'exploitation 120.

De préférence, lors de la phase d'exploitation 120, chaque réseau de neurones 25, 27 est entraîné par la ou les itérations précédente(s).

La phase d'apprentissage 110 est de préférence répété plusieurs fois, comme illustré par la flèche I2.

L'étape de mesure 122 est une étape optionnelle. En variante, les signaux de mesure sont obtenus à partir d'une base de données, non représentée.

L'étape d'affichage 130 et/ou l'étape d'émission 128 sont des étapes optionnelles.

## Revendications

1. Procédé de détermination (100) d'un état, notamment d'un état d'usure, d'au moins un élément de sol (3), le procédé de détermination (100) comprenant :
- une étape de réception (124) de signaux de mesure de l'élément de sol (3) en provenance d'au moins deux capteurs (8, 9, 10, 11, 12, 13) de types différents ;
- une étape de détermination (126) d'une caractéristique de l'élément de sol (3) relative à son état par au moins un réseau de neurones (25, 27) en fonction des signaux de mesure.

2. Procédé de détermination (100) selon la revendication 1, dans lequel le type de chaque capteur (8, 9, 10, 11, 12, 13) est choisi dans la liste constituée par :
- un capteur d'image (8) configuré pour prendre au moins une image dans un espace chromatique prédéterminé, tel que l'espace chromatique RGB ou l'espace chromatique TSL;
- un capteur d'image de type capteur d'ultraviolet (9) ;
- un capteur d'image de type capteur d'infrarouge (10) ;
- un capteur d'image de type capteur de profondeur (11) ;
- un capteur d'image de type capteur d'ultrason (12), et
- un capteur d'hydrométrie (13).

3. Procédé de détermination (100) selon la revendication 1 ou 2, dans lequel l'étape de détermination (126) est mise en oeuvre par un premier réseau de neurones (25) et par un second réseau de neurones (27) recevant en entrée au moins une donnée de sortie du premier réseau de neurones (25).

4. Procédé de détermination (100) selon la revendication 3, dans lequel l'étape de détermination (126) comprend une sous-étape de détection (136), mise en oeuvre par le premier réseau de neurones (25), lors de laquelle le premier réseau de neurones (25) fournit en sortie soit une indication selon laquelle l'élément de sol (3) présente une usure inférieure ou égale à un seuil d'usure, soit une indication selon laquelle l'élément de sol (3) présente une usure supérieure au seuil d'usure,
le premier réseau de neurones (25) étant un réseau de neurones préalablement entrainé par un élément de sol (3) formant modèle pour définir le seuil d'usure.

5. Procédé de détermination (100) selon la revendication 3 ou la revendication 4, dans lequel l'étape de détermination (126) comprend en outre une sous-étape de classification (138) d'un défaut de l'élément de sol (3), mise en oeuvre par le second réseau de neurones (27), lors de laquelle le second réseau de neurones (27) fournit en sortie ladite caractéristique de l'élément de sol (3), comprenant une classe de défaut dudit élément de sol (3) dépendant des signaux de mesure.

6. Procédé de détermination (100) selon la revendication 5, prise en combinaison avec la revendication 4, dans lequel, lorsque l'indication en sortie du premier réseau de neurones (25) indique que l'élément de sol (3) présente une usure supérieure au seuil d'usure, le premier réseau de neurones (25) fournit en outre en sortie au moins une position, sur une face de l'élément de sol (3), dudit défaut de l'élément de sol (3).

7. Procédé de détermination (100) selon l'une quelconque des revendications 3 à 6, dans lequel au moins un signal parmi les signaux de mesure comprend au moins une image de l'élément de sol (3), l'étape de détermination (126) comprenant une sous-étape de prétraitement (134), lors de laquelle l'image de l'élément de sol (3) est découpée en une pluralité de parties de tailles identiques, et
de préférence dans lequel lors de la sous-étape de détection (136), le premier réseau de neurones (25) reçoit en entrée au moins chaque partie de l'image de l'élément de sol (3), et fournit en sortie au moins l'indication correspondante pour chaque partie de l'image de l'élément de sol (3).

8. Procédé de détermination (100) selon l'une quelconque des revendications précédentes, dans lequel au moins un signal des signaux de mesure comprend une mesure d'hydrométrie de l'élément de sol (3), et l'étape de détermination (126) comprend en outre une sous-étape d'analyse d'hydrométrie (132), lors de laquelle un module d'analyse d'hydrométrie (28) génère une alerte lorsque la mesure d'hydrométrie de l'élément de sol (3) comprend une humidité strictement inférieure à un seuil inférieur prédéterminé ou strictement supérieure à un seuil supérieur prédéterminé.

9. Procédé de détermination (100) selon l'une quelconque des revendications précédentes, comprenant en outre une étape de mesure (122) de l'élément de sol (3) pour obtenir les signaux de mesure, l'étape de mesure (122) comprenant au moins une première mesure et une seconde mesure successives, l'élément de sol (3) étant éclairé par un dispositif d'éclairage mobile (14), la première mesure étant obtenue lorsque le dispositif d'éclairage mobile (14) est positionné à une première position par rapport à l'élément de sol (3), et la seconde mesure étant obtenue lorsque le dispositif d'éclairage (14) est positionné à une seconde position différente de la première position.

10. Procédé de détermination (100) selon l'une quelconque des revendications précédentes, comprenant en outre une étape d'émission (128) au moins de la caractéristique de l'élément de sol (3) relative à son état à au moins un système de détermination distant à un système de détermination (5) mettant en oeuvre le procédé de détermination (100), pour un apprentissage d'un réseau de neurones distant du système de détermination distant.

11. Système de détermination (5) d'un état, notamment d'un état d'usure, d'au moins un élément de sol (3), le système de détermination (5) comprenant un module de réception (20) configuré pour recevoir des signaux de mesure de l'élément de sol (3) en provenance d'au moins deux capteurs (8, 9, 10, 11, 12, 13) de types différents,
le système de détermination (5) étant configuré pour déterminer une caractéristique de l'élément de sol (3) relative à son état par au moins un réseau de neurones (25, 27) en fonction des signaux de mesure.

12. Ensemble (2) comprenant un système de détermination (5) selon la revendication 11, et comprenant en outre un système de mesure (4) comprenant un dispositif de transport (6) de l'au moins un élément de sol (3), et au moins deux capteurs (8, 9 ,10 ,11, 12, 13) de types différents.
